# EUROPEAN PATENT APPLICATION

(11) **EP 0 594 888 A1**
(43) Date of publication of application: **04.05.1994**
(21) Application number: 92118568.2
(22) Date of filing: 30.10.1992
(51) Int. Cl.: G06F 11/00

(54) **Method and apparatus for computer software testing**

(71) Applicant: International Business Machines Corporation, Armonk, N.Y. 10504 (US)
(72) Inventor: Reichert, Wolfgang, W-7038 Holzgerlingen (DE)
(74) Representative: Schäfer, Wolfgang, Dipl.-Ing.

(57) **Abstract**

A test method for function testing allows testing of application program interface functions (4) or other internal and external function calls with all their parameters. The interface function (4) is defined once. Thereafter the test is performed interactively: The desired function (4) is selected and its parameters are specified. Input and output parameters defined in a parameter definition part (6) are monitored. Sessions can be recorded and replayed. The method is implemented in an interface function tester (1).

## Description

The invention concerns a method for testing computer software as set forth in the first part of claim 1 and a test system for the use of that method.

The usage of computer software, especially software developed by a team of software engineers in a modular manner, depends on the process of testing, verification, and validation of the entire software product. The term testing is used as the process of using the software in a simulated environment with specific input data and a predetermined set of output data in order to measure the behavior of the software compared with the expected behavior. The process ends up in the process of verification when the behavior of the software is what is expected. Validation is the process of evaluating the verification measurements when verification has been executed successfully.

When the software product is developed as a set of different, interacting modules, one method usually assumed to be necessary for the process of verification is module testing. Other methods which form the entire process of verification are static code inspection (code walk-through), hardware-software-integration (HSI) tests, and system tests.

To execute module testing as a complete process as required to form verification all modules have to be executed with different test data as input to cover all possible paths in that module and to cover all possible singularities - such as limit exception etc. This process is well-known as dynamic module testing as described by Kleinschmidt et al, 1983, in DGLR-Bericht 83-02, p184 (D1). For every module one or even more than one test driver has to be produced to execute the module under test or a group of modules under test (called group module test). Especially for a software product with many different modules (100 - 1000) and/or many different test cases it is complicated to develop so many test drivers which could contain software errors by themselves.

Every test driver has to fulfill a set of criteria to be used in a commonly accepted verification process. Input and output parameters and return codes have to be traced. To locate defects in a module the test program itself must be reliable and must give assistance. Test sessions have to be recorded and must be replayable while the actual results (values of output parameters and return codes) are compared against the expected results.

Computer software with high reliability is mostly written in a high level computer language (known as C, MODULA, ADA, C++ and others) which support the modularity of the development.

In high level languages all interfaces provided by the module are usually described in a special interface definition section or in a separate program file (called Header file or Definition file). Whenever another module utilizes one of these interfaces the compiler for that language (e.g. the C compiler) is able to check that the interface call is compatible to the provided interface definition in terms of type, length, and limits of all parameters.

Several methods to execute a module or modules in a test environment are used. Myers in the book "Methodisches Testen von Programmen" (D2), R.Oldenbourg Verlag München and Wien, 2. Auflage, 1987, p. 145 ff. describes the method to write a small test program (testdriver, testbed) and he describes several tools to support this process. The method described has the disadvantage, that for every module or group of modules a test driver has to be generated. Even if this process is supported by a tool, in (D2) called "Automated Unit Test" or by a language, as by Heuermann et al (D3) IBM Technical Disclosure Bulletin, 17(7), p. 2030-2035 (1974) which is called "Module Interface Language" (MIL), or by Hoffman et al. (D4), in Software Eng. Notes, Vol. 14 (8), p.97-102 (1989), which uses the expert system language "PROLOG", there are disadvantages remaining inherent by the method:
a) The test driver (or whatever it is called) has to be rewritten, recompiled and/or relinked in order to fit the new test case, whenever the module to be tested is changed.
b) The test case has to be derived from the module to be tested by an independent engineering process, manually or tool-supported, but with the possibility to introduce discrepancies between the actual interface of the module to be tested and the test driver's interpretation of the module's interface.

In particular, the combination of both disadvantages leads to the situation that, in the case when the interface of the module to be tested has been changed, the test driver has to be changed as well, which process is subject to additional failures.

The methods described in D3 and D4 have the additional disadvantage that a knowledge of a test programming language (MIL or PROLOG respectively) is necessary.

In some cases, the test driver definitions have been derived by using a document other than the source of the module to be tested, i.e. system or module requirement documents, leading to additional erroneous situations in many cases, because there is a situation that two different sources of information may have different contents. Even if the same source is used it is not guaranteed that the same modification level is used.

The object of the invention is to develop a method and an implementation of that method in an apparatus to test software modules without knowing a specific language and without using redundant interface definitions from a independent source other than the module in an easy way in order to get reliable test results.

The invention solves the problem by the teaching contained in the characterizing part of claim 1.

Using the method as claimed in claim 1 has primarily the effect that the structure of the test input data is derived from the interface structure information avoiding any discrepancies resulting from redundancies of the necessary information.

The information about the module interface can be converted into module interface information independent from the software language used or even in a form directly usable and standardized optimally for the function interface tester. This information can be displayed on a display of the computer together with the request to input information about the test input parameters as an interactive query session.

After executing the test, the results of the test - this means the output of the module to be tested - can be displayed and stored and automatically compared with expected output data.

The test data received by the input device can be stored for later evaluation).

The input data can be direct numbers or strings etc. preferably for single parameters, as reference to data stored in the computer preferably for tables, matrices, etc., in the main storage, in a file, in a storage containing the input data of a previous test session or as functional calls activating programs anywhere in the computer in which the test is executed or in any other computer connected with the computer in which the test is executed, preferably when testing loops with random numbers or sequences, etc. Preferably each parameter request with the name and the data type displayed enables an input option to select the method of interpretation when inputting the data.

The method according to the invention is further tought in the form of a system. Using that type of system, discrepancies of the interface description redundantly existing at different sources are prevented.

The said elements, means, and steps of the systems or of the methods respectively described above, claimed, used as invented, and described in the preferred embodiment are not limited to any constraints in respect to their concepts or their process conditions. The methods are not limited to be executed in a digital computer in each step, but single steps could be executed manually or by other machines than a programmed general purpose digital computer.

The software of the system is not limited to that realized by a software for a general purpose computer, but it is left open to the specific application to realize it by a dedicated electronic calculator or any kind of programmed digital computer.

Further details, features, and advantages of the invention are contained in the following description of the drawings, in which - as an example - a system and a method as invented is displayed.
- Fig.1: shows a system with an interactive software tester calling the program under test,
- Fig. 2: shows a system with an interactive software tester imbedding the program under test,
- Fig. 3: shows a system with an interactive software tester imbedded in the program under test,
- Fig. 4: shows a system with an interactive software tester called by the program under test,
- Fig.5: shows a declaration for a function with 2 parameters in a C-language environment (a), in a MODULA environment (b), as an abstract interface declaration (c), and as generated code macros for the Interactive Function Tester (d),
- Fig. 6: shows the test execution of functions,
- Fig. 7: shows a system with an interactive software tester calling the program under test using another test program.
- Fig. 8: general flow diagram of testing

The Interactive Function Tester 1 is the embodiment as an example how to use the method in a real testing case. In this embodiment the same program is used to test all application program product 20 interface functions.

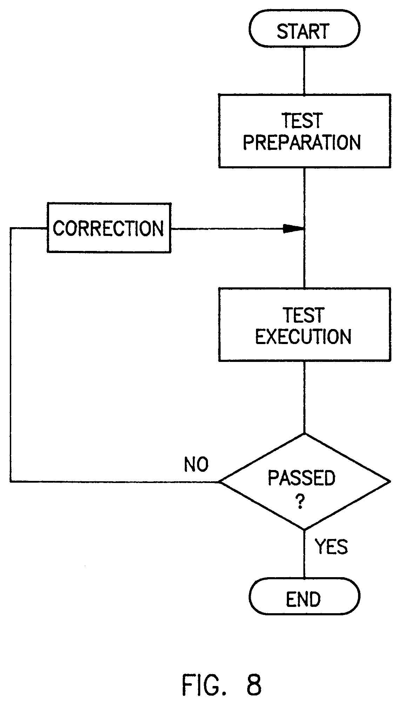

In Fig. 8 a general flow diagram shows the process of testing with the test preparation phase, the test execution phase, and possible corrections.

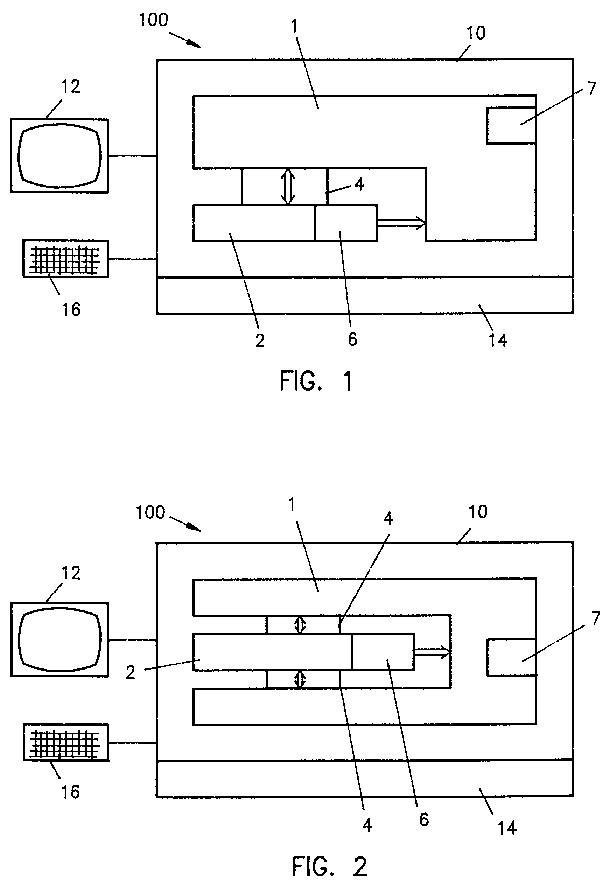

Figures 1-4 shows what the test environment looks like. The Interactive Function Tester 1 is bound together with the program 2 to be tested. The program 2 may be a whole program product or a single module.

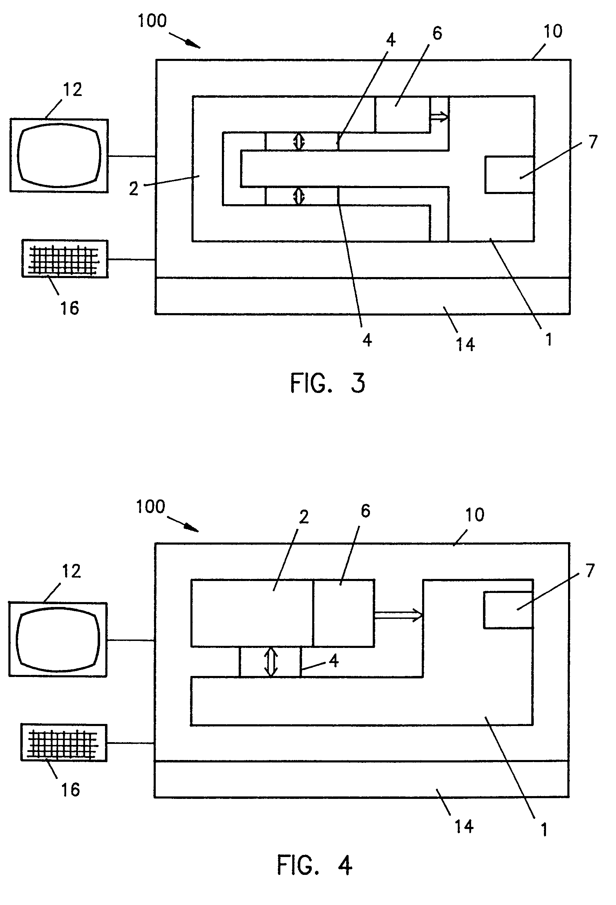

The Interactive Function Tester 1 is imbedded (is called and calls) in the program under test 2 (see Fig. 3), is underneath (called by) the program under test 2 (Fig. 4), overhead (calls) the program under test 2 (see Fig.1) or even imbeds (calls and is called) the program under test 2 (Fig. 2). The concept of the Interactive Function Tester 1 allows all views. In the last two cases the program 2 is the controlling part, in the first 2 cases the program 2 is invoked through the Interactive Function Tester 1.

Before starting a test execution session the module interface definitions are interpreted and converted, and code macros (see list at the end of this description) are generated and compiled for the Interactive Function Tester 1. A code macro is a piece of source code. This is done once for each module interface and must be repeated if the interface is changed.

Based on the available module interface definition the functions to be tested are selected. The language-specific parameter definition 6 is interpreted and converted to a language-independent "Abstract Interface Declaration".

This Abstract Interface Declaration contains
- a function declaration for each function to be tested:
   -- Function name,
   -- Parameter list
- a variable declaration for each variable named in the parameter or variable list:
   -- Variable name,
   -- Variable type.

If the variable type is an aggregate of variables (like a structure, table, matrix, array, etc.) the Abstract Interface Declaration contains
- an aggregate declaration for each aggregate of variables referred to in another variable declaration:
   -- Aggregate name,
   -- Variable list.

This Abstract Interface Declaration is converted into table-like code macros and compiled, so that it can be used by the Interactive Function Tester 1.

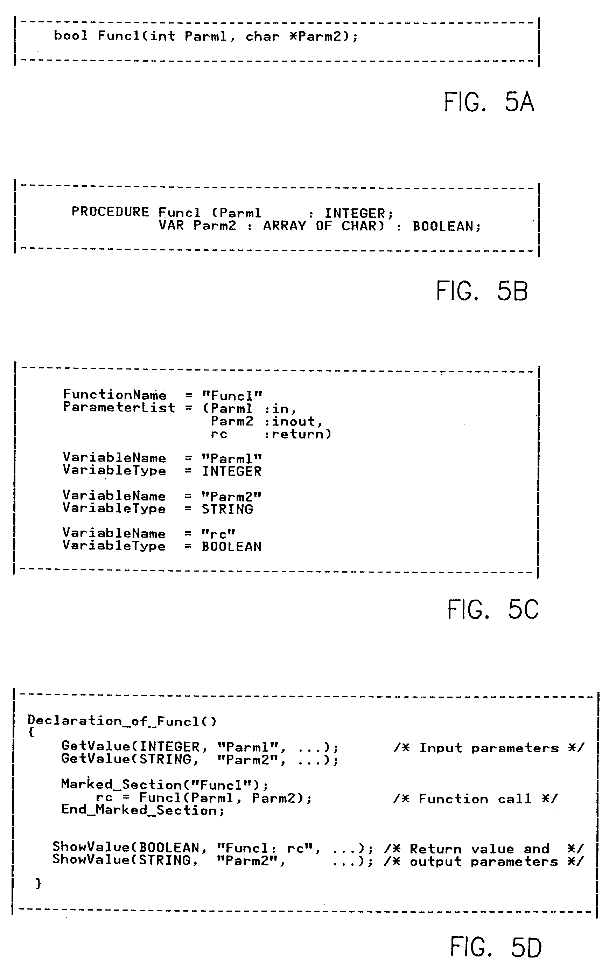

In Fig. 5 a typical interface definition for the C-language compiler (5a) and for the MODULA compiler (5b) is shown for a function with 2 parameters. "Parm1" is an input parameter, while "Parm2" is both input and output parameter. Fig. 5c shows the Abstract Interface Declaration for this function.

Additionally to the parameters parm 1 and parm 2 a return code rc is returned to the calling programs. This return code is handled like any output parameter.

In the example of Fig.5d the corresponding code macros are outlined for the same function.

For each input parameter a macro named "GetValue" is coded while for each output parameter a macro named "ShowValue" is used. The purpose of the marked section ("Marked_Section" ... "End_Marked_Section") is to prove that the error has not been caused by the test program in case of an abnormal end.

After the test preparation the test is executed in the test computer.

During the execution the user is able to interact with the program 2 (if it provides a user interface) and with the Interactive Function Tester 1 concurrently.

Interactively the program under test 2 is selected and parameters are entered. Input and output parameters and return codes are traced. Test sessions are recorded and can be replayed.

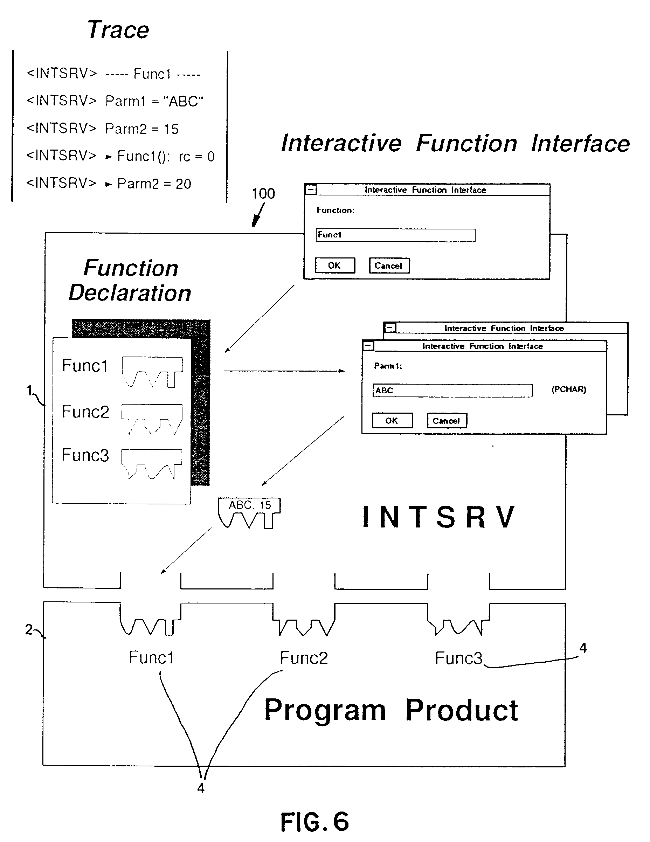

Figure 6 shows the test execution phase. In the preceding preparation phase the function name and its interface have been defined. A test step is interactively executed as follows:
- Select a function to be tested
- Enter input parameter(s) as prompted by the Interactive Function Tester
- Function "Func1" is called
- On function return output parameter(s) and return code are displayed.

In addition the Interactive Function Tester 1 can be used to simulate the interface 4 of a particular function. For this scenario the Interactive Function Tester 1 replaces the function to be simulated. This is usually described by the term "scaffolding." The Interactive Function Tester 1 is called through an additional entry interface which is defined in the same way as the one previously described. The same macros are used. For scaffolding the execution sequence is:
- Invocation through the particular entry interface.
- Displaying input parameters.
- Prompting for output parameters and return code.

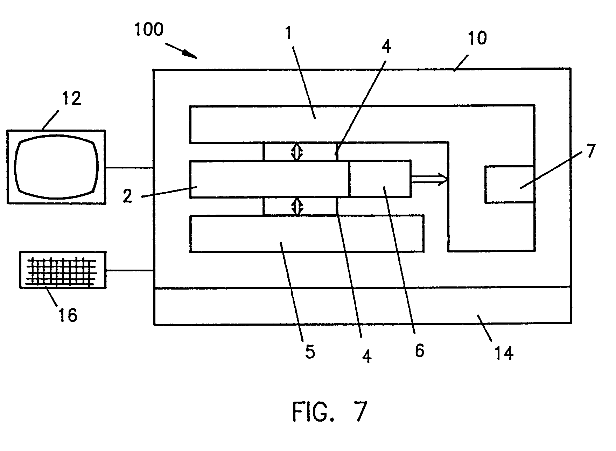

An efficient way to use the Interactive Function Tester 1 is its integration with other product-specific test tools. The Interactive Function Tester 1 is built in such a form that it can be combined with other test tools or module-specific test programs 5 (see figure 7). It is even possible to integrate a single feature into another program.

All Interactive Function Tester 1 macros can be used externally.

The tester maintains a variable pool 7. Its purpose is
- to save automatically the value of an input or output parameter,
- to use this value as default if the same parameter is needed again
- to exchange data with other test programs.

Another test program can set a default for a parameter or retrieve a value from the variable pool 7 and thus exchange data.

Other programs are able to access the variable pool 7 of the tester 1 and thus exchange data.

For a test program it is essential that all details of the test can be traced: function calls, parameters, return codes, timing dependencies, etc. The Tester allows the independence of both monitoring in a interactive window and logging to a file.

The Interactive Function Tester 1 is designed to be used interactively.

However, complete sessions or parts of them can be recorded and replayed. The recorded file is editable. On invocation of the interactive function tester 1 a profile is executed. Furthermore the test cases can be named. If such a name is passed to the tester it searches for the corresponding file and replays the recorded session.

The test cases can be prepared in any program in the test computer or even in another computer connected with the test computer in any way (by communication line, magnetic device transfer etc.).

After executing the test, the results of the test - this means the output of the module to be tested - can be displayed and stored and automatically compared with expected output data.

The most significant macros used in the Interactive Function Tester are shown here to provide more details and to explain the technical aspects:

The macro "GetValue(...)" prompts the user for the value of an input parameter. The current value of this parameter is retrieved from the variable pool and is shown as default. 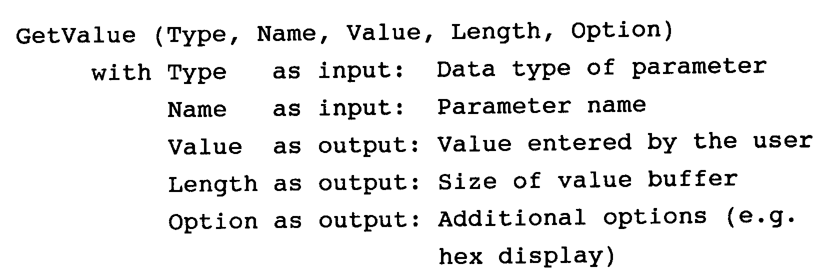
As user input special characters are allowed in a C like notation (C is a standardized program language). Hexadecimal input is accepted, too.

The macro "ShowValue(...)" informs about the value of an output parameter, that means the value returned by the called function. The specified value is stored in the variable pool and usually shown on a monitor. 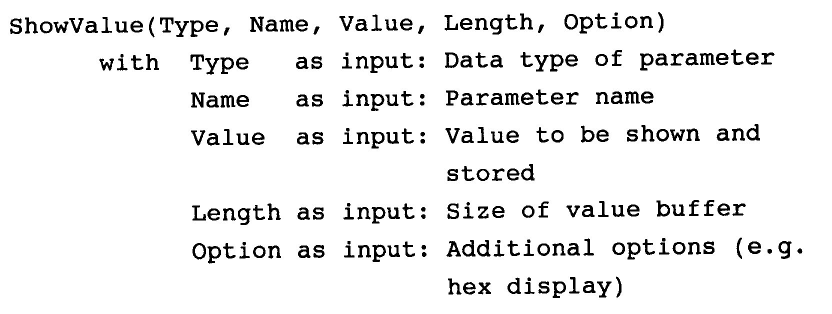
The macro "SetValue(...)" is used to store/modify a value in the variable pool. 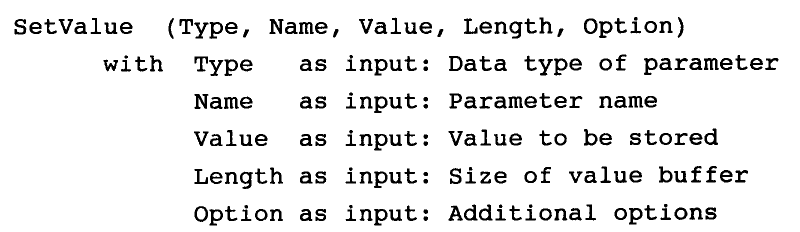
The method invented and the system as described in the preferred embodiment has been used to test and verify a software product written in the languages C, MODULA and C++ under the operating system OS/2 on a personal computer (PS/2). The software product was structured in approximately 350 functional interfaces all tested with the invented method, verified and validated using the test results.

## Claims

1. Method for testing a program product consisting of at least one module (2), wherein said module (2) contains information about the module interface definitions, by using at least one of said modules in an environment consisting of computer hardware (10) containing computer test driver software (1) and a set of input parameters for said module activated by said computer hardware (10) containing said computer test driver software (1) said method being characterized by the step of
- analyzing said information about said module interface definitions by getting at least name and type of at least one parameter necessary to activate said module.

2. Method as set forth in claim 1, wherein said step of analyzing comprises converting the analyzed information into an abstract module interface definition independent from the software environment used in the program product to be tested.

3. Method as set forth in claim 1 or 2, wherein said step of analyzing further comprises the converting the module interface definition into test driver specific code.

4. Method as set forth in one of the claims 1 to 3, characterized by an additional step of displaying the analyzed information about at least one of said parameters on any display device (12) attached to said computer,

5. Method as set forth in one of the claims 1 to 4, characterized by an additional step of receiving input information data for said parameters from any input device (16) attached to said computer, and activating said module using said input information data.

6. Method as set forth in one of the claims 1 to 5, characterized by an additional step of displaying the resulting output of said module on any display device (12) of said computer.

7. Method as set forth in one of the claims 1 or 6, characterized by an additional step of recording the resulting output of said module on any storage device (14) of said computer.

8. Method as set forth in one of the claims 1 to 7, characterized by an additional step of comparing the resulting output of said module against expected output.

9. Method as set forth in at least one of the claims 5 to 8, characterized by an additional step of recording said received input information data on any storage device (14) of said computer.

10. Method as set forth in at least one of claims 5 to 8, characterized in that said input information data received contains directly the values to be used in said module.

11. Method as set forth in at least one of the claims 5 to 8, characterized in that said input information data is a reference to a location, where the values to be used by said module is available.

12. Method as set forth in claim 11, characterized in that said value referenced by location in a data file and that the reference is pointing to said data file.

13. Method as set forth in claim 11 or 12, characterized in that said reference is pointing to input information data recorded in an previous application of the method.

14. Method as set forth in at least one of the claims 1 to 8, characterized in that said input information data contains activation information to activate another computer software to generate the values to be used in said module.

15. Method as set forth in at least one of the claims 9 to 14, characterized in that the input information data contains information about the interpretation of the input information data selected as direct value, reference to a location, or activation of another computer software to generate the value to be used for each parameter.

16. System (100) for testing a program product (2) consisting of at least one software module, wherein said module contains information about the module interface definitions
- with computer hardware (10) comprising at least one processor,
- with test driver software means (1), loaded in said computer hardware (10)
characterized in that
said software means (1) include means to analyze said information about said module interface definitions getting at least name and type of at least one parameter necessary to activate said module.

17. System as set forth in claim 16, characterized in that the computer hardware (10) additionally comprises display means (12) and the test driver software means (1) comprises means to display the analyzed information about at least one of said parameters on said display means.

18. System as set forth in claim 16 or 17, characterized in that the computer hardware (10) additionally comprises input means (16) and that the test driver software means comprises means to receive input information data for said parameters from said input means (16).

19. System as set forth in one of the claims 16 to 18, characterized in that the computer hardware (10) additionally comprises storage means (14) and the test driver software means comprises means to selectively record the received input information data and the resulting output on said storage means (14).
